# EUROPEAN PATENT SPECIFICATION

(11) **EP 2 704 583 B1**
(45) Date of publication and mention of the grant of the patent: **07.08.2019**
(21) Application number: 12720416.2
(22) Date of filing: 03.05.2012
(51) Int. Cl.: A23L 3/015, A23B 7/005, A23B 7/148, B65B 55/06

(54) **METHOD OF PRESERVING MUSHROOMS**
VERFAHREN ZUR KONSERVIERUNG VON PILZEN
PROCÉDÉ DE CONSERVATION DE CHAMPIGNONS

(30) Priority: 06.05.2011 NL 2006738
(43) Date of publication of application: 12.03.2014
(73) Proprietor: Scelta Essenza Holding B.V., 5872 CH Broekhuizen (NL)
(72) Inventor: KLERKEN, Johannes, Gerardus, Maria, NL-5927 NW Venlo (NL); BARTELS, Gerard, NL-5927 NW Venlo (NL)
(74) Representative: Hoyng Rokh Monegier LLP
(86) International application number: PCT/EP2012/001903
(87) International publication number: WO 2012/152411

(56) References cited:
- EP-A1- 2 191 728
- EP-A2- 0 564 026
- FR-A1- 2 717 989
- JP-A- H0 622 722
- DATABASE FSTA [Online] INTERNATIONAL FOOD INFORMATION SERVICE (IFIS), FRANkFURT-MAIN, DE; ROGACHEV V I ET AL: "Changes in nitrogenous substances in heat-sterilized mushrooms. (translated)", XP002664408, Database accession no. FS-1977-11-J-1596 & KONSERVNAYA I OVOSHCHESUSHIL'NAYA PROMYSHLENNOST, no. No. 12, 1976, page 9, KONSERVNAYA I OVOSHCHESUSHIL'NAYA PROMYSHLENNOST' 1976 VSES. NAUCHNO-ISSLED. INST. KONSERVNOI I OVOSHCHESUSHIL'NOI PROMYSHLENNOSTI, USSR
- MORITA Y: "Mfg. aloe reishi useful in cancer, hypertension etc. - by soaking ganoderma mushroom in aloe extract, vacuum packing and sterilising", WPI / THOMSON,, vol. 1987, 21 January 1987 (1987-01-21), XP002659864,
- DATABASE WPI Week 199414 Thomson Scientific, London, GB; AN 1994-114156 XP002664373, & JP 6 062729 A (DAINIPPON PRINTING CO LTD) 8 March 1994 (1994-03-08)
- DATABASE FSTA [Online] INTERNATIONAL FOOD INFORMATION SERVICE (IFIS), FRANkFURT-MAIN, DE; ZHANG H W ET AL: "Techniques for producing canned Lentinus edodes. (translated)", XP002664409, Database accession no. FS-1997-06-J-0159 & EDIBLE FUNGI, vol. 18, no. 4, 1996, page 38, EDIBLE FUNGI 1996 DEP. OF FOOD, COMMERCIAL CENT., HUANGSHAN CITY, ANHUI 242700, CHINA
- DATABASE WPI Week 199445 Thomson Scientific, London, GB; AN 1994-362569 XP002664374, & JP 6 284857 A (IIYAMA MIYUKI NOGYO KYODO KUMIAI) 11 October 1994 (1994-10-11)

## Description

Common mushrooms of the species *Agaricus bisporus* are the most commonly used mushrooms in Europe, America's and in many Asian countries for human consumption. Hence, many methods are described to preserve the freshness of the mushrooms before sale. Equally, many methods are described to prepare ready-to-use mushrooms; i.e. mushrooms that are treated in one way or another comprising a cooking step, or preservation methods for keeping such mushrooms for months.

Known methods include: (1) replacing the air atmosphere with a gaseous mixture that slows down discoloration and maturation of the mushroom, which method is used for the sale of fresh mushrooms (see e.g. US2006/159809); (2) blanching the mushrooms, and thereafter packing and sterilizing (see e.g. EP0564026 or EP2191728); (3) washing and deep-freezing the mushroom; (4) washing and drying the mushrooms; (5) mashing or grinding (parts) of the mushroom, and treating the mashed material. Several variants of these processes are described in for example JP-A-6062729, JP-A-6284857 and FR-A-2717989.

Despite the large number of possible ways to treat mushrooms, there is an ongoing request for better quality products and for products with a sufficient (refrigerated or ambient) shelf life, in particular for the ready-to-use, cooked mushrooms. Ready-to-use mushrooms are in particular used in commercial operations, like foodservice and food manufacturers, and by private consumer families. A process that uses less energy would also be preferred.

Mushrooms, in particular those of which the weight loss is considerable upon blanching, have specific problems in their preparation as the weight loss causes substantial economic loss.

Mushrooms generally need to be washed. Washing with cold water generally is considered less effective. Hence, the general way mushrooms are treated is by hot water or steam for about 10 minutes to achieve both washing and blanching such that the mushrooms shrink and have less than 5 vol% free (air) volume and upon further heat treatment like pasteurization or sterilization would shrink less than 15 wt%, preferably less than 10 wt% and even more preferably less than 5 wt%. Thereafter, the blanched mushrooms are general packed with a brine solution of which the main ingredient is water and the package with mushrooms is pasteurized or sterilized. The blanching and washing step with hot water leads to loss of savory ingredients, loss of nutritional value, leading to reduced taste relative to fresh mushrooms and to a substantial loss of weight. In particular because of the weight loss problem, it is common to treat mushrooms with vacuum, and - generally at the same time - supply water (or water with additives), to replace the air in the mushrooms before blanching (see for example EP0564026 or EP2191728). This treatment indeed lowers the weight loss during blanching, but it has no positive influence on the taste.

### Summary of the invention

The present invention provides a method to produce ready to use, cooked, preserved mushroom with one or more of an improved taste and flavor, improved nutritional value, and/or an improved use of energy.

The method according to the present invention for preserving *Agaricus bisporus* mushrooms, wherein optionally a relatively small amount (relative to the amount of fresh mushrooms) of additional ingredients is used, comprises the following consecutive steps:
a. inserting clean fresh mushrooms in a plastic laminate bag;
b. subjecting the bag and mushrooms to vacuum at a pressure of less than 200 mbar;
c. sealing the bag while keeping the vacuum;
d. releasing the vacuum
e. treating the sealed bag with mushrooms at a temperature 60 °C or more.

By this vacuum treatment, the air is removed from the mushrooms, but without heating and without replacing that space with liquid. The blanching step of the preserving process is excluded, which means a saving of energy. The mushroom juices and flavors, and the nutritional value that normally disappear during the blanching are saved in the product.

According to the present invention, the bag is sealed while under vacuum. Hence, one of the further differences with the prior art is, that usually the free space in the mushrooms is replaced by a liquid before further treatment. In the present method, no replacement is added, nor needed. Moreover, the bag in a normal atmosphere environment presses the mushrooms to smaller volume, increasing the effectiveness of heat transfer in a subsequent step. Furthermore, the conductivity is enhanced because there is no longer an isolating layer between the mushroom and the heat source because no air is present around the mushrooms .

It is possible, and sometimes preferred, to add additives, like a liquid savory product, salt, spices, acids or anti-oxidants. Solids may be added as concentrated solutions or dispersions in water. The amount of additional ingredients is small relative to the amount of mushrooms, like for example less than 20 ml per mushroom, and/or less than 30 wt% relative to the mushroom, and preferably even substantially lower amounts. The amounts (weight or volume) are defined relative to fresh mushrooms.

After sealing of the bag, the bag with mushrooms will be heat treated to cook the mushrooms. This can for example be done at relatively low temperature, such that the content of the bag is pasteurized, or it can for example be done at high temperature, such that the content is commercially sterilized. The juices and aroma's that are set free from the mushrooms (that cause the weight loss in the conventional processes during blanching) during the cooking do not disappear from the package, and are preserved in the package. Such juices are valuable ingredients for sauces, soups and other dishes. The resulting mushrooms are of better taste than mushrooms treated in a conventional way, comprising a blanching step before packaging. The energy used to prepare the mushrooms is also lowered with respect to the generally applied method. XP-0022664408 (FS-1977-11-J-1596) describes analysis of mashed fresh mushrooms, which are vacuum sealed in a glass ampoule, for the determination of changes in nitrogen containing substances. This reference does not relate to the storage of mushrooms, suitable for human consumption.

### Short description of the figure:

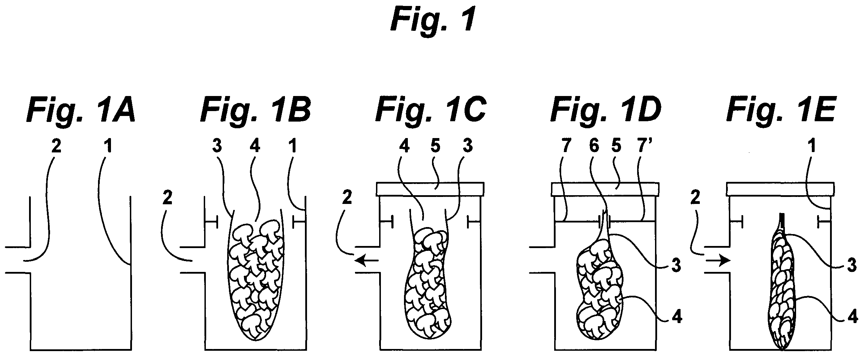

Fig 1 shows steps of the method of the invention.

### Detailed description of the invention

The *Agaricus bisporus* used in the current process loses substantial amount of weight upon blanching, at least 15 wt% upon blanching treatment. Blanching in this definition is understood to be a heat treatment with water of 95 °C during 10 minutes. A substantial amount of loss is about 10 wt% or more, preferably about 15 wt% or more.

The mushrooms can be used as a whole, but also sliced or diced for example into slices, stripes or cubicals. Hence, in a further embodiment of the invention, the mushrooms are sliced into slices of between 2-15 mm, preferably 2-10 mm, or preferably 5-9 mm, or preferably 3-6 mm before applying step (a) of the present invention. Also, the stems can be separated from the caps, and only the caps used in the process of the invention. In the remainder of this description, the word "mushroom" is used to denote not only entire mushrooms, but also the sliced or diced mushrooms, or parts of the mushrooms as used in the process of the invention.

In the method of the invention, it is preferred, that the mushrooms are clean before inserting them into the bag.

The mushrooms are not heated beforehand in a way that they would lose significant savory or nutritional value, as would be the effect of blanching.

The most important treatment before packaging is cleaning. Hence, it is necessary to clean the mushrooms in another way than with hot water or steam for e.g. 10 min as normally done with the combined cleaning and blanching treatment.

In one embodiment of the invention, either hand cleaning, brushing or washing with cold water is feasible. However, cleaning with warm or hot water is possible, if done in a sufficient short time. For example, water of 60 °C can be used to wash the mushrooms, if the washing step is done within for example one minute. Alternatively, washing by spraying with water of 80 °C or 95 °C for 20 sec or 10 sec with the mushrooms on a conveyer belt equally can result in clean mushrooms while still the savory and nutritional value is contained in the mushrooms.

In another embodiment of the invention, it is preferred, to use mushrooms that are cultivated in such a way, that no debris is attached to the mushrooms. Thus, according to a preferred method of the present invention, the mushrooms are grown such that the mushrooms after harvesting do not contain debris.

In yet another preferred embodiment of the invention, the mushrooms are washed with cold water. In a preferred embodiment of the invention, the mushrooms are washed with water of a temperature of less than 40 °C, preferably less than 20 °C.

In summary, with respect to a treatment before packaging, the mushrooms are not substantially heat treated before filling the bag with mushrooms, meaning that the mushrooms have lost less than 3 wt%, preferably less than 1 wt% relative to untreated mushrooms, by a treatment before filling the bag with mushrooms. Preferably, the mushrooms are used in step (a) without treatment at a temperature higher than 40 °C, preferably not higher than 30 °C.

In another embodiment, the method comprises adding additives, either added to the mushrooms before subjecting the bag to vacuum, or into the bag before applying vacuum, or during vacuum treatment. Additives may be savory products, such as salt, a salt solution, mushroom concentrate liquid, spices, and other known savory ingredients like acids or other ingredients. Other suitable additives are anti-oxidants.

Such additives (additional ingredients) preferably are added in a relatively small amount (defined relative to the untreated mushroom). In one preferred embodiment, an amount is added of less than 20 vol%, and even more preferred in an amount of less than 10 vol%. Alternatively, the amount of additive is about 20 wt% relative to the mushroom or less, preferably about 10 wt% or less.

It is preferred not to add diluent like water. However, if some minor amount of water is added, this may not be detrimental. An acceptable amount may be about 10 wt% or less, preferably about 5 wt% or less. For example, when mushrooms are washed with cold water, some water may stay adhered to the mushroom. In contrast, the presence of substantial amounts of water, like for example more than 30 wt% - which is common in preservation of mushrooms in tins or glass jars - increases the heat requirements for sterilization substantially. Furthermore, such amounts of water dilute the taste of the mushrooms. Hence, water in an amount of more than 20 wt% relative to the (untreated) mushrooms are preferably not added in the present invention.

In one embodiment of the invention, the packaging only contains mushroom with optionally some small amount of further savory ingredient(s).

In another embodiment of the invention, the packaging contains further solid ingredients. In this embodiment, the liquid and savory ingredients originating from the mushroom are preferably at least partially absorbed by the solid ingredients. Suitable solid ingredients are (partly) cooked grains or grain products, like rice, risotto, pasta and other water absorbing foods like dried vegetables. The amount of solid ingredient may be 2 wt% or more, preferably 10 wt% or more. Generally, the amount will be 100 wt% or less, preferably about 20 wt% or less.

The plastic laminate bag preferably has good oxygen and water vapor barrier properties. For example, in case the oxygen barrier is too low, oxygen may enter the package, which may cause oxidation of the content. The requirements for the bag depend on the intended use, and the intended period to keep the mushrooms. In case it is envisaged that the mushrooms are used within a few weeks, the requirements for the laminate bag are different than when the product needs to be able to be stored for e.g. three or twelve months. Pasteurized bags generally have refrigerated shelf life of 1-6 weeks up to 1-12 months. Sterilized bags generally have an ambient shelf life more than 3 months, depending on the quality of the bag. For a shelf life 12 months at ambient temperature or more, an aluminum laminated bag, or comparable, is preferred.

The size of the bag is not critical, and may be 0.2 L or larger, and is for institutional use preferably 1 L or larger, and may be for example 2, 3, 5 or 10 L. Generally, the size will be smaller than 50 L, preferably smaller than 30L, like for example 30 or 20 L. In a bag of 30 L, 10 kg *Agaricus bisporus* mushrooms can be suitably treated.

Generally, laminate bags are useful, in which at least two layers of plastic films are adhered to each other. The laminate may comprise more than two layers. Furthermore, the laminate bag may be printed. Examples of plastic layers include PET film (polyester-terephthalate), BOPP film (biaxially oriented polypropene), CPP film (cast polypropene), PE film (polyethylene), NY (nylon, polyamide) and the like. The two or more films may be directly extruded to each other, or may be laminated with an adhesive, or an adhesive film. Laminates with four, five or more layers are used in practice. Preferably, the laminate bag comprises a barrier layer which increases the oxygen barrier properties.

Preferred examples of suitable plastic laminate bags include bags that have at least one layer of PET film, preferably provided with an oxygen and optionally water vapor barrier layer and a PE or CPP film for the sealing. PET is a preferred plastic, as this is resistant to temperatures used during retort (during sterilization). Examples of suitable barrier layers on the plastic in the laminate bag include a barrier layer from aluminum, aluminum oxide or silicium oxide, triazine or combinations thereof.

In one preferred embodiment, the barrier layer comprises aluminum, as that is relatively cheap and has very good oxygen and water vapor barrier properties.

In another preferred embodiment, the barrier layer comprises aluminum oxide or siliciumoxide, as that is a transparent barrier layer. A transparent barrier layer has the advantage that a customer actually can see the content of the package, and that such package can be heated in a magnetron.

Preferably, the laminate bag is retortable, i.e. it is able to withstand sterilizing conditions. After retort, the laminate bag still should possess barrier properties better than the properties of the plastic layers intrinsically (i.e. without the additional barrier layer). Laminates are available that are retortable. Such laminates generally have special adhesives between the plastic layers of the laminate.

In the method according the present invention the vacuum is applied at a pressure of 200 mbar or less, and more preferably at a pressure of around 100 mbar. The pressure is defined as absolute pressure. A lower pressure has the advantage that more air is removed from the mushrooms before sealing the package, and more useful product can be delivered to a customer. Generally, the pressure will be higher than about 5 mbar (abs), preferably higher than 10 mbar. A very low pressure (abs), i.e. high vacuum may increase costs without adding much in value.

After vacuum treatment, the bag is sealed, preferably using a melt sealable layer comprised in the laminate bag, by applying heat to a strip of the bag at the top. In an alternative embodiment, the bag is sealed using an adhesive, or instead of a heat seal, the sealing of the bag can be done by using an ultrasonic seal or an impulse seal. In any way, the vacuum should be retained inside the bag.

After release of the vacuum (outside the bag), the mushrooms are compressed by the air-pressure outside the bag. This has as further advantage that in a subsequent heat treatment the heat is effectively transferred to the mushroom, as no air layer causes isolation of the mushroom from heating. Because of the practical absence of air, discoloring and burning of the mushrooms during sterilization process is avoided.

In a preferred embodiment of the invention, a second seal is applied after release of the vacuum, to increase the security of the closure.

Apparatus for executing the method of the invention are known as such, for example for packaging coffee.

In an alternative way, the bag with mushrooms can be placed outside the vacuum chamber and just the top of the bag inside the vacuum chamber. The vacuum is applied into the bag through a special embossed inside layer of the bag. This method can be applied - as example - at a vertical flow-pack machine from GKS Packaging.

After packaging in the above described way, the packaged mushrooms are subjected to sufficient high temperature for a sufficient long time to cause the mushrooms to be pasteurized. Preferably, the mushrooms are subjected to sufficient high temperature for a sufficient long time to cause the mushrooms to be sterilized. With both treatments, the mushrooms may be treated sufficiently long to be "cooked", and ready for consumption.

For pasteurization and cooking the mushrooms, it would be suitable to apply a temperature of 60 to 100 °C for 40 to 10 min, for example 20 min at 80 °C, or 10 min at 100 °C. With this range of temperatures, it is not necessary to use pressurized equipment.

For sterilization, it is preferred to apply a temperature between 100 and 150 °C, preferably between 120 and 140 °C, for about 30 to 5 min. For example, a temperature of 125 °C can be used for 15 min. Such process can also comprise two or more steps, in which for example in a first step, a temperature is applied of 80 °C for 10 min (to shrink the mushrooms) and thereafter a temperature of 127 °C for 10 min to achieve full sterilization.

After treatment, the bags can be cooled and stored for sale. Generally, the package will be preprinted. The package can also be provided with a label, mentioning the content, packaging date, and/or ultimate use date and the like.

It will be understood by the skilled person, that combinations of preferred embodiments of the several steps that are disclosed above, according to the description, are disclosed as well, because it is preferred to combine preferred embodiments.

Figure 1 shows a schematic drawing of the vacuum chamber of an apparatus that can be used to implement the method of the invention. In Fig 1A, the vacuum chamber (1) is shown, provided with an outlet (2) to be able to apply vacuum; in Fig 1B, the vacuum chamber has been provided with the bag (3) with mushrooms (4). In Fig 1C, the vacuum chamber (1) is closed with a lid (5), and vacuum is applied through outlet (2), shown by the arrow. Thereafter, as is shown in Fig 1D, the bag (2) is sealed by applying a heating element (7, 7') at the top (6) of the bag, while still applying vacuum. Thereafter, the vacuum can be released, as shown in Fig 1E with the arrow through (2). This causes the bag (3) and mushrooms (4) to be compressed. Thereafter, the bag can be taken out of the vacuum chamber for further treatment, like for example adding an additional seal, and thereafter heat treatment.

The invention will be elucidated with the following, non limiting examples.

### Example 1

In a vacuum packaging machine of Henkovac, a bag (of the basic structure: PET-Alu-NY-CPP, of retort quality and heat sealable) of 2.5 L volume was inserted, with 1000 gram mushrooms of the species *Agaricus bisporus* that were brushed clean by hand. After closing of the chamber, vacuum was applied down to a pressure of 120-80 mbar (abs). The bag was sealed by pressing a heated strip to the top site of the bag for 6 seconds. After release of the vacuum, the bag was taken out of the vacuum chamber. The bag was brought into sterilization equipment (a chamber that can be heated to 150 °C, can withstand a pressure of 8 bar and in which up to 5 bar steam can be added). The bag was treated with steam at 125 °C for 15 min. The resulting cooked mushrooms occupied 25 % less volume than before cooking, and liquid was set free during the cooking process. The liquid originated from the mushrooms. The mushrooms in the sterilized bag had a storage stability of at least twelve month. The content of the bag was tasted by a panel, and compared to the packed cooked mushrooms according to the prior art, and to freshly cooked mushrooms. The taste panel - consisting of 5 people - gave the following marks:

| Treatment | Marks (on a scale 1-10; 10 is best) | Remark |
|---|---|---|
| Freshly cooked | 9.0 | |
| Method according to the invention | 9.0 | Very homogeneous taste |
| Method according to the prior art | 6.5 | Less intense taste |

The test panel clearly rated the mushrooms treated according to the invention higher than mushrooms treated according to the prior art method.

### Example 2

The method as described in example 1 was used, but the mushrooms were sliced into slices of 5 mm thick. The bag was pasteurized by heating the bag for 20 min at 90 °C, by which time the mushrooms were shrunk 28 %, and fully cooked.

### Example 3

The method as described in example 1 was used, but in addition, additives were added, as shown in the following table.

| Amount of mushrooms | Additive | Amount of additive |
|---|---|---|
| 1.0 kg | Soy sauce | 10 ml |
| 1.0 kg | Condensed mushroom savory liquid of Scelta Mushrooms | 10 ml |
| 1.0 kg | Table salt and dried garlic | 10 gram and 5 gram |

The mushrooms were tasted by a panel, and were considered at least as good as freshly cooked mushrooms with the same additives.

## Claims

1. A method for preserving *Agaricus bisporus* mushrooms, wherein optionally a relatively small amount, relative to the amount of fresh mushroom, of additional ingredients is used, the method comprising the following consecutive steps:
a. inserting clean fresh mushrooms in a plastic laminate bag;
b. subjecting the bag with mushrooms to vacuum at a pressure of 200 mbar or less;
c. sealing the bag while keeping the vacuum;
d. releasing the vacuum; and
e. treating the bag with mushrooms at a temperature of 60 °C or more.

2. A method according to claim 1 wherein the mushroom are inserted in the plastic laminate bag as a whole .

3. The method according to claim 1, wherein the mushrooms are in a sliced or diced form.

4. The method according to any one of claims 1-3, wherein the mushrooms are grown such that the mushrooms after harvesting do not contain debris.

5. The method according to any one of claims 1-4, wherein the mushrooms are not heat treated before filling the bag with mushrooms, meaning that the mushrooms have lost less than 3 wt%, by any heat treatment before filling the bag with mushrooms.

6. The method according to any one of claims 1-5, wherein the mushrooms are washed with water of a temperature of less than 40 °C.

7. The method according to any one of claims 1-6, wherein an additive such as a savory product, salt, spice, acid, antioxidant or other ingredient is added to the mushrooms or to the bag before subjecting the bag to vacuum, or to the bag during vacuum.

8. The method according to any one of claims 1-7, wherein an additive is present in the bag in an amount of about 30 wt% relative to the mushroom or less.

9. The method according to any one of the preceding claims, wherein water in an amount of more than 20 wt% relative to the mushrooms is not added.

10. The method according to any one of the preceding claims, wherein the packaging contains further solid ingredients such as grain and/or dried vegetable in an amount between 2 and 100 wt% relative to the weight of fresh mushrooms.

11. The method according to any one of the preceding claims, wherein the plastic laminate bag comprises a layer of PET provided with an oxygen and water vapor barrier layer and a PE, CPP or other plastic layer for sealing, and wherein the laminate bag comprises a barrier layer from aluminum, aluminum oxide or silicium oxide, triazine, or combinations thereof.

12. The method according to any one of the preceding claims, wherein the laminate bag is between 1 and 30 L.

13. The method according to any one of the preceding claims, wherein the laminate bag is retortable.

14. The method according to any one of the preceding claims, wherein the vacuum is applied at a pressure of about 100 mbar.

15. The method according to any one of the preceding claims, wherein the bag with mushrooms, after sealing, is subjected to sufficient high temperature for a sufficient long time to cause the mushrooms to be pasteurized or sterilized.

## Patentansprüche

1. Verfahren zum Konservieren von *Agaricus bisporus*-Pilzen, wobei optional eine relativ kleine Menge, im Verhältnis zu der Menge von frischen Pilzen, von zusätzlichen Zutaten verwendet wird, das Verfahren umfassend die folgenden aufeinanderfolgenden Schritte:
a. Einfügen von sauberen frischen Pilzen in eine Kunststofflaminattüte;
b. Aufbringen eines Vakuums auf die Tüte mit Pilzen bei einem Druck von 200 mbar oder weniger;
c. Abdichten der Tüte, während das Vakuum erhalten bleibt;
d. Aufheben des Vakuums; und
e. Behandeln der Tüte mit Pilzen bei einer Temperatur von 60 °C oder mehr.

2. Verfahren nach Anspruch 1, wobei die Pilze im Ganzen in die Kunststofflaminattüte eingefügt werden.

3. Verfahren nach Anspruch 1, wobei die Pilze scheibenförmig oder gewürfelt sind.

4. Verfahren nach einem der Ansprüche 1 bis 3, wobei die Pilze so gezogen werden, dass die Pilze nach dem Ernten keinen Schmutz enthalten.

5. Verfahren nach einem der Ansprüche 1 bis 4, wobei die Pilze vor dem Füllen der Tüte mit Pilzen nicht wärmebehandelt werden, was bedeutet, dass die Pilze weniger als 3 Gew.-% durch eine beliebige Wärmebehandlung vor dem Füllen der Tüte mit Pilzen verloren haben.

6. Verfahren nach einem der Ansprüche 1 bis 5, wobei die Pilze mit Wasser mit einer Temperatur von weniger als 40 °C gewaschen werden.

7. Verfahren nach einem der Ansprüche 1 bis 6, wobei ein Zusatz, wie z.B. ein herzhaftes Produkt, Salz, Würzmittel, Säure, Antioxidans, oder eine andere Zutat zu den Pilzen oder zu der Tüte vor dem Aufbringen eines Vakuums auf die Tüte oder zu der Tüte während des Vakuums hinzugefügt wird.

8. Verfahren nach einem der Ansprüche 1 bis 7, wobei ein Zusatz in der Tüte in einer Menge von ungefähr 30 Gew.-% relativ zu den Pilzen oder weniger vorhanden ist.

9. Verfahren nach einem der vorhergehenden Ansprüche, wobei Wasser in einer Menge von mehr als 20 Gew.-% relativ zu den Pilzen nicht hinzugefügt wird.

10. Verfahren nach einem der vorhergehenden Ansprüche, wobei die Verpackung ferner feste Zutaten wie z.B. Getreide und/oder getrocknetes Gemüse in einer Menge von zwischen 2 und 100 Gew.-% relativ zum Gewicht von frischen Pilzen enthält.

11. Verfahren nach einem der vorhergehenden Ansprüche, wobei die Kunststofflaminattüte eine Schicht PET umfasst, die mit einer Sauerstoff- und Wasserdampf-Barriereschicht und einer PE-, CPP- oder einer anderen Kunststoffschicht zum Abdichten versehen ist, und wobei die Laminattüte eine Barriereschicht aus Aluminium, Aluminiumoxid oder Siliziumoxid, Triazin oder Kombinationen davon umfasst.

12. Verfahren nach einem der vorhergehenden Ansprüche, wobei die Laminattüte zwischen 1 und 30 L ist.

13. Verfahren nach einem der vorhergehenden Ansprüche, wobei die Laminattüte autoklavierbar ist.

14. Verfahren nach einem der vorhergehenden Ansprüche, wobei das Vakuum bei einem Druck von ungefähr 100 mbar aufgebracht wird.

15. Verfahren nach einem der vorhergehenden Ansprüche, wobei die Tüte mit Pilzen, nach dem Abdichten, einer ausreichend hohen Temperatur über einen ausreichend langen Zeitraum ausgesetzt wird, um zu verursachen, dass die Pilze pasteurisiert oder sterilisiert werden.

## Revendications

1. Procédé de conservation de champignons *Agaricus bisporus,* une quantité relativement faible, par rapport à la quantité de champignons frais, d'ingrédients supplémentaires étant facultativement utilisée, le procédé comprenant les étapes successives suivantes :
a. introduire des champignons frais propres dans un sac stratifié en matière plastique ;
b. soumettre le sac contenant les champignons à un vide à une pression de 200 mbars ou moins ;
c. sceller de manière étanche le sac tout en maintenant le vide ;
d. casser le vide ; et
e. traiter le sac contenant les champignons à une température de 60°C ou plus.

2. Procédé selon la revendication 1, dans lequel les champignons sont introduits en entier dans le sac stratifié en matière plastique.

3. Procédé selon la revendication 1, dans lequel les champignons sont sous une forme tranchée ou coupée en dés.

4. Procédé selon l'une quelconque des revendications 1 à 3, dans lequel les champignons sont amenés à pousser de telle sorte que les champignons après récolte ne contiennent pas de débris.

5. Procédé selon l'une quelconque des revendications 1 à 4, dans lequel les champignons ne sont pas traités thermiquement avant le remplissage du sac avec les champignons, ce qui signifie que les champignons ont perdu moins de 3 % en poids, par n'importe quel traitement thermique avant le remplissage du sac avec les champignons.

6. Procédé selon l'une quelconque des revendications 1 à 5, dans lequel les champignons sont lavés avec de l'eau à une température de moins 40°C.

7. Procédé selon l'une quelconque des revendications 1 à 6, dans lequel un additif tel qu'un produit salé, du sel, une épice, un acide, un antioxydant ou un autre ingrédient, est ajouté aux champignons ou au sac avant de soumettre le sac à un vide, ou au sac pendant la mise sous vide.

8. Procédé selon l'une quelconque des revendications 1 à 7, dans lequel un additif est présent dans le sac dans une quantité d'environ 30 % en poids par rapport aux champignons ou moins.

9. Procédé selon l'une quelconque des revendications précédentes, dans lequel de l'eau dans une quantité de plus de 20 % en poids par rapport aux champignons n'est pas ajoutée.

10. Procédé selon l'une quelconque des revendications précédentes, dans lequel l'emballage contient d'autres ingrédients solides tels que des céréales et/ou légumes séchés dans une quantité comprise entre 2 et 100 % en poids par rapport au poids des champignons frais.

11. Procédé selon l'une quelconque des revendications précédentes, dans lequel le sac stratifié en matière plastique comprend une couche de PET ayant une couche barrière à l'oxygène et à la vapeur d'eau et une couche de PE, CPP ou autre matière plastique pour le scellement étanche, et le sac stratifié comprenant une couche barrière contre l'aluminium, l'oxyde d'aluminium ou l'oxyde de silicium, la triazine ou des combinaison de ceux-ci.

12. Procédé selon l'une quelconque des revendications précédentes, dans lequel le sac stratifié est compris entre 1 et 30 L.

13. Procédé selon l'une quelconque des revendications précédentes, dans lequel le sac stratifié est stérilisable.

14. Procédé selon l'une quelconque des revendications précédentes, dans lequel le vide est appliqué à une pression d'environ 100 mbars.

15. Procédé selon l'une quelconque des revendications précédentes, dans lequel le sac contenant les champignons, après scellement, est soumis à une température suffisamment élevée pendant une durée suffisamment longue pour amener les champignons à être pasteurisés ou stérilisés.
